# EUROPEAN PATENT SPECIFICATION

(11) **EP 2 170 004 B1**
(45) Date of publication and mention of the grant of the patent: **16.10.2013**
(21) Application number: 09008005.2
(22) Date of filing: 18.06.2009
(51) Int. Cl.: H04W 60/04

(54) **System, apparatus and method for location registration of an access terminal**
System, Vorrichtung und Verfahren für eine Standortregistrierung eines Zugangsgerätes
Système, dispostif et procédé d'enregistrement de localisation d'un terminal d'accès

(30) Priority: 29.09.2008 JP 2008249491
(43) Date of publication of application: 31.03.2010
(73) Proprietor: Hitachi, Ltd., Chiyoda-ku Tokyo 100-8280 (JP)
(72) Inventor: Kubo, Shigeyasu, Tokyo 100-8220 (JP); Takahashi, Yosuke, Tokyo 100-8220 (JP); Yoshida, Akihiko, Tokyo 100-8220 (JP); Takayanagi, Daigo, Tokyo 100-8220 (JP)
(74) Representative: Strehl Schübel-Hopf & Partner

(56) References cited:
- WO-A1-93/06685
- US-A- 5 629 975
- US-A- 5 642 398
- US-A1- 2006 079 244

## Description

### BACKGROUND OF THE INVENTION

### Field of the Invention

The present invention relates to the configuration of a wireless communication system, and more particularly to the paging technology for calling a terminal.

### Description of the Related Art

When the user is not carrying out data communication in a mobile communication system, the user carries an access terminal with communication disconnected from a base station (standby state) considering the battery consumption. In this case, however, when data arrives at an access terminal in the standby state, multiple base stations must transmit the call arrival signal to that access terminal because the mobile communication system has no way to know where the access terminal is. When many base stations transmit the call arrival signal to one access terminal which is to receive the call, a large amount of wireless resources will be consumed. To minimize the consumption of wireless resources for transmitting the call arrival signal, the technology called a (location) registration technology is disclosed in 3GPP2(3rd generation partnerships) C.S0084-000-006 Version 2.0 for limiting the base station, to which the access terminal belongs, to a specific range. 3GPP2(3rd generation partnerships) C.S0084-000-006 Version 2.0 is the standard document that describes the technical specifications for the UMB(Ultra Mobile Broadband) system that is the 3.9G next generation wireless communication technology.

JP-A-2007-183837 discloses a (location) registration method (distance-based registration method) that primarily uses the distance for registration. In the distance-based registration method, an access terminal stores the latitude and longitude information on the base station for which the registration was performed last. When the access terminal moves to a cell under control of another base station, the access terminal receives the latitude and longitude information on the base station in the destination cell and calculates the movement distance. If the value of the movement distance exceeds a predetermined distance (a threshold that determines if the registration is to be performed), the access terminal transmits the registration message to the base station in the destination cell for updating the location of the access terminal.

In the distance-based registration method described above, the number of base stations, which transmit the call arrival notification (paging message), can be adjusted by adjusting the range for which the registration is performed and, so, the consumption amount of wireless resources to be used for transmitting paging messages can be adjusted. Location registration, if conducted each time an access terminal moves from base station to base station, allows the session reference network controller to determine one base station to which the access terminal belongs, thus minimizing the consumption amount of wireless resources to be used for call arrival notification.

### SUMMARY OF THE INVENTION

However, if all access terminals perform the registration each time they move from base station to base station, the registration messages are transmitted each time access terminals move from base station to base station. This means that the frequency of the registration is increased and the amount of wireless resource consumption involved in the registration is increased. Therefore, deciding the size of the registration range (registration area) is a key to system optimization.

In a conventional system, the maintenance engineer calculates the optimum value of the registration range as the value of the registration information to be input to the session reference network controller that integrally manages the access terminals and base stations and, after that, manually enters the calculated value. This operation, which is a manual operation, sometimes involves human errors and, at the same time, gives the maintenance engineer a heavy load. Another problem with this method is to increase a maintenance cost. This is because, each time a new base station is added, the registration information on the base station and the session reference network controller must be manually set again.

JP-A-2007-183837 discloses an environment setting method for reducing the administrator's load involved in the environment setting of a computer, but this method does not consider the configuration necessary for the registration in a wireless communication system. Thus, even if this technology is simply applied to a wireless communication system, it does not solve the problem to be solved by the present invention.

Another prior art example of registering access terminals based on their distance from various base stations is WO 93/00685 A1.

It is an object of the present invention to provide a wireless communication system capable of automatically inputting the registration information into the session reference network controller that integrally manages access terminals and base stations.

The object is met by the invention as defined in the appended claims.

A session reference network controller stores the number of access terminals, N, in advance. And, when a "base distance" setting request is received from an access terminal via a base station, the session reference network controller or an OAM (Operation, Administration and Maintenance) server determines a base station, which is one of a plurality of controlled base stations and is Nth nearest from the base station that has transmitted the setting request, and sets the distance between the base station, which has transmitted the setting request, and the base station, which is the Nth nearest, as the "base distance".

The wireless communication system according to the present invention suppresses the consumption amount of wireless resources involved in the registration.

The automatic input of the registration information into the session reference network controller which integrally manages the access terminals and base stations, eliminates the possibility of human errors that may occur when the registration information is set. In addition, the present invention eliminates the need to manually set again the registration information in the base stations and the session reference network controller, which are required each time a new base station is added, thus giving the system operation companies a large cost merit.

Other objects, features and advantages of the invention will become apparent from the following description of the embodiments of the invention taken in conjunction with the accompanying drawings.

### BRIEF DESCRIPTION OF THE DRAWINGS

FIG. 1 is a diagram showing the configuration of a wireless communication system.
FIG. 2 is a block diagram showing the configuration of an access terminal.
FIG. 3 is a block diagram showing the configuration of a base station.
FIG. 4 is a block diagram showing the configuration of a session reference network controller.
FIG. 5 is a block diagram showing the configuration of an OAM (Operation, Administration and Maintenance) server.
FIG. 6 is a sequence diagram for automatically setting a registration information for a new base station.
FIG. 7 is a diagram showing the registration database of the session reference network controller.
FIG. 8 is a flowchart showing how a Registration Radius is derived.
FIG. 9 is a diagram showing topological relations between the base station C, and the base station A and the base station B.
FIG. 10 is a sequence diagram when an access terminal performs the location registration.
FIG. 11 is a diagram showing a topological relation among access terminals and base stations.
FIG. 12 is a sequence diagram for automatically setting the registration information in a new base station when the OAM (Operation, Administration and Maintenance) server derives the Registration Radius.

### DETAILED DESCRIPTION OF THE EMBODIMENT

An embodiment of the present invention will be described in detail below with reference to the drawings.

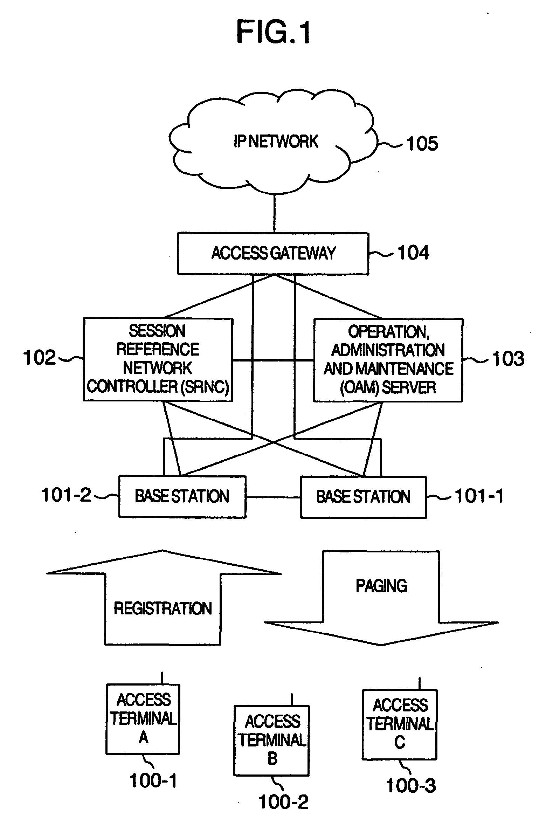

FIG. 1 is a diagram showing the configuration of a wireless communication system to which the present invention is applied. The wireless communication system comprises access terminals 100 (in this configuration, there are three access terminals 100-1, 100-2, and 100-3), base stations 101 (in this configuration, there are two base stations 101-1 and 101-2), a Session Reference Network Controller (SRNC) (also called as a call processing control device or a communication control device) 102, an Operation, Administration and Maintenance (OAM) Server (also called as a monitor control server) 103, and an access gateway 104.

The access terminals 100 and base stations 101 are connected wirelessly. The base stations 101, the session reference network controller 102, the OAM (Operation, Administration and Maintenance) server 103, and the access gateway 104 are connected via wired lines in mesh topology. The access gateway 104 is connected to an internet protocol (IP) network 105. The access terminals 100 transmit and receive data to and from a server connected to the IP network 105 via the base stations 101 and the access gateway 104.

Location registration and paging are performed between the access terminals 100 and the base stations 101. For example, when the access terminal 100-1 requests the base stations 101-1 to perform the registration, the base station 101-1 receives the request and recognizes that the access terminal 100-1 is now under its control. If a call arrives at the access terminal 100-1, the base station 101-1 performs the paging (call) for the access terminal 100-1.

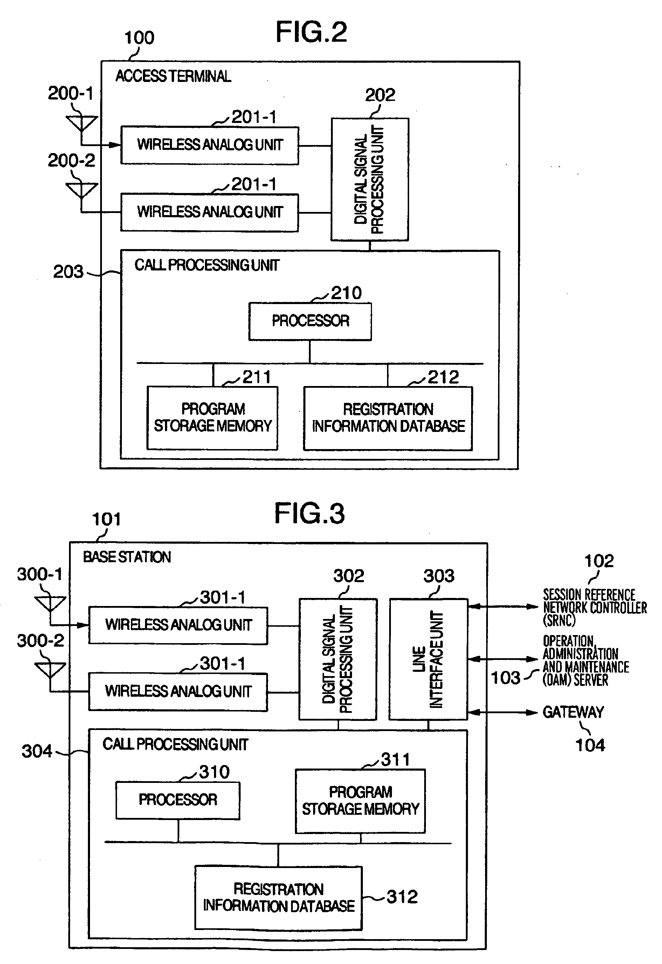

FIG. 2 is a block diagram showing the configuration of the access terminal 100. The access terminal 100 comprises multiple transmission/reception antennas 200 (in this configuration, there are two antennas 200-1 and 200-2), wireless analog units 201 (in this configuration, there are two wireless analog units 201-1 and 201-2) each of which is connected to one of antennas 200, a digital signal processing unit 202 connected to the wireless analog units 201, and a call processing unit 203 connected to the digital signal processing unit 202.

The wireless analog unit 201 converts the analog signal, received from the base station 101 via the antenna 200, to the digital signal and outputs the converted signal to the digital signal processing unit 202. The wireless analog unit 201 also converts the digital signal, received from the digital signal processing unit 202, to the analog signal and transmits the converted signal to the base station 101 via the antenna 200. The digital signal processing unit 202 demodulates the signal from the wireless analog unit 201 or modulates the signal to be transmitted to the base station 101. The call processing unit 203 comprises a processor (control unit) 210, a memory 211 in which the programs executed by the processor 210 are stored, and a registration information database 212 in which the registration information from the base station 101 is stored. The access terminal 100 has the function that compares the sector parameter, informed from the base stations 101, and the registration information stored in the registration information database and the function that transmits a registration message to the base stations 101 based on the comparison result.

FIG. 3 is a block diagram showing the configuration of the base station 101. The base station 101 comprises multiple transmission/reception antennas 300 (in this configuration, there are two antennas 300-1 and 300-2), wireless analog units 301 (in this configuration, there are two wireless analog units 301-1 and 301-2) each of which is connected to one of antennas 300, a digital signal processing unit 302 connected to those wireless analog units 301, a call processing unit 304 connected to the digital signal processing 302, and a line interface unit 303 connected to the call processing unit 304. The line interface unit 303 is connected also to the session reference network controller 102, the OAM (Operation, Administration and Maintenance) server 103, and the access gateway 104.

The wireless analog unit 301 converts the analog signal from the access terminal 100, received via the antenna 300, to the digital signal and outputs the converted signal to the digital signal processing unit 302. The wireless analog unit 301 also converts the digital signal, received from the digital signal processing unit 302, to the analog signal and transmits the converted signal to the access terminal 100 via the antenna 300. The digital signal processing unit 302 demodulates the signal from the wireless analog units 301 or modulates the signal to be transmitted to the access terminal 100. The call processing unit 304 comprises a processor (control unit) 310, a memory 311 in which the programs executed by the processor 310 are stored, and a registration information database 312 in which the sector parameter to be informed to the access terminal 100, registration information to be transmitted to the session reference network controller 102, and the registration information transmitted from the OAM (Operation, Administration and Maintenance) server are stored.

The base station 101 has the function that adds an IP address to a registration message transmitted from the access terminal 100 and transmits the message to the session reference network controller 102, the function that stores the registration information, allocated by the OAM (Operation, Administration and Maintenance) server 103, in the registration information database 312, the function that notifies an IP address to the session reference network controller 102 as the registration information, and the function that transmits a paging message to the access terminal 100 based on a paging request from the session reference network controller 102.

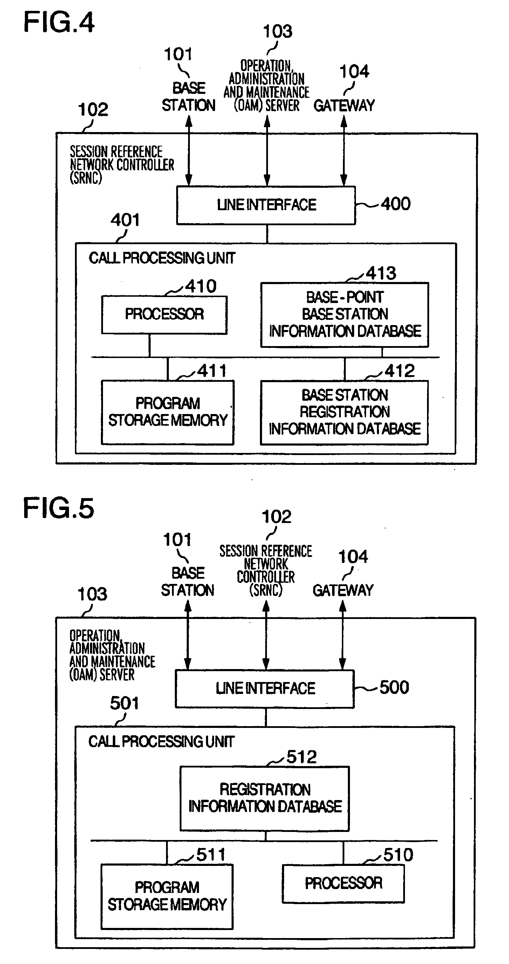

FIG. 4 is a block diagram showing the configuration of the session reference network controller 102. The session reference network controller 102 comprises a line interface 400 connected to the base station 101, OAM (Operation, Administration and Maintenance) server 103, and the access gateway 104 and a call processing unit 401 connected to the line interface 400.

The call processing unit 401 comprises a processor (control unit) 410, a memory 411 in which the programs executed by the processor 410 are stored, a base station registration information database 412 in which registration information notified by the base station 101 is stored, and a base-point base station information database 413 in which the IP address of a base station, for which the access terminal 100 performed the location registration last, and the access terminal identifier of the access terminal 100, which transmitted the registration message, are stored.

The session reference network controller 102 has the function that stores the registration message information, transmitted from the base stations 101, in the registration information database and the registration message information is stored for each access terminal 100, the function that determines the paging area based on the information stored in the registration information database, and the function that requests the base station 101 located in the determined paging area to transmit a paging message.

FIG. 5 is a block diagram showing the configuration of OAM (Operation, Administration and Maintenance) server 103. The OAM (Operation, Administration and Maintenance) server 103 comprises a line interface 500 connected to the base stations 101, the session reference network controller 102, and the access gateway 104 and a call processing unit 501 connected to the line interface 500.

The call processing unit 501 comprises a processor (control unit) 510, a memory 511 in which the programs executed by the processor 510 are stored, and a registration information database 512 in which the registration information on the base stations 101, derived by the processor 510, is stored.

The OAM (Operation, Administration and Maintenance) server 103 has the function that derives registration information based on latitude/longitude information and an IP address transmitted from a newly added base station 101 and the function that transmits the derived registration information to the base station 101.

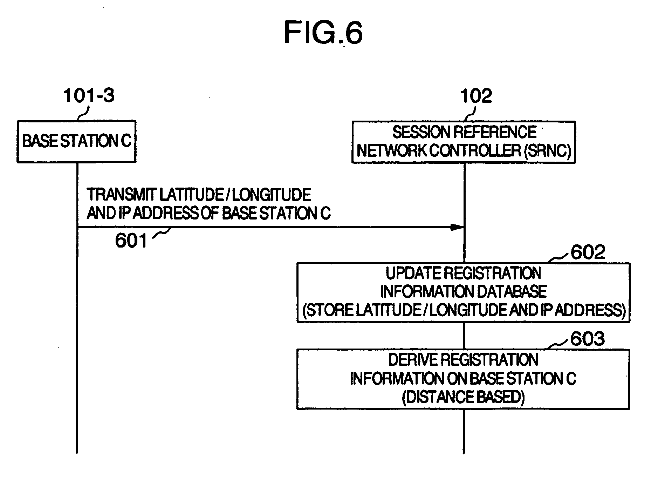

FIG. 6 is a sequence diagram for automatically setting the registration information for a newly added base station. In the description below, the base station C 101-3 is a newly added base station.

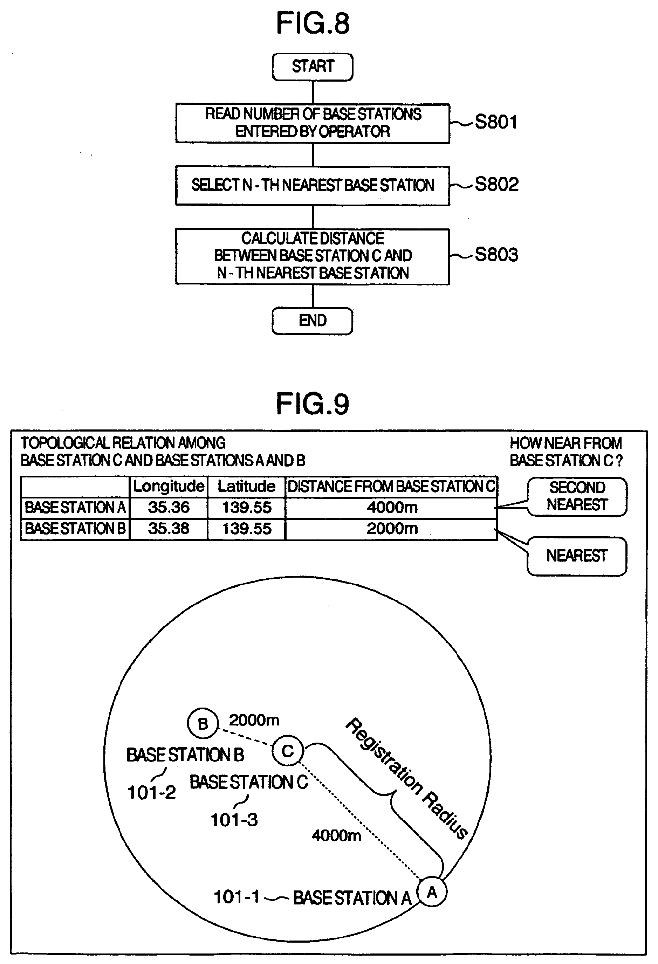

The base station C 101-3 transmits its own latitude/longitude information and the IP address to the session reference network controller 102 (step 601). The session reference network controller 102 stores the received latitude/longitude information and IP address of the base station C 101-3 in the base station registration information database 412 (step 602). After that, the session reference network controller 102 derives the Registration Radius of the base station C 101-3 based on the latitude/longitude information on the base station C 101-3 (step 603). Here, RegistrationRadius is a value used by an access terminal as a threshold to determine if the location registration is to be performed. Therefore, the Registration Radius may be referred to as a "base distance". How to derive the Registration Radius will be described in detail later with reference to FIG. 8.

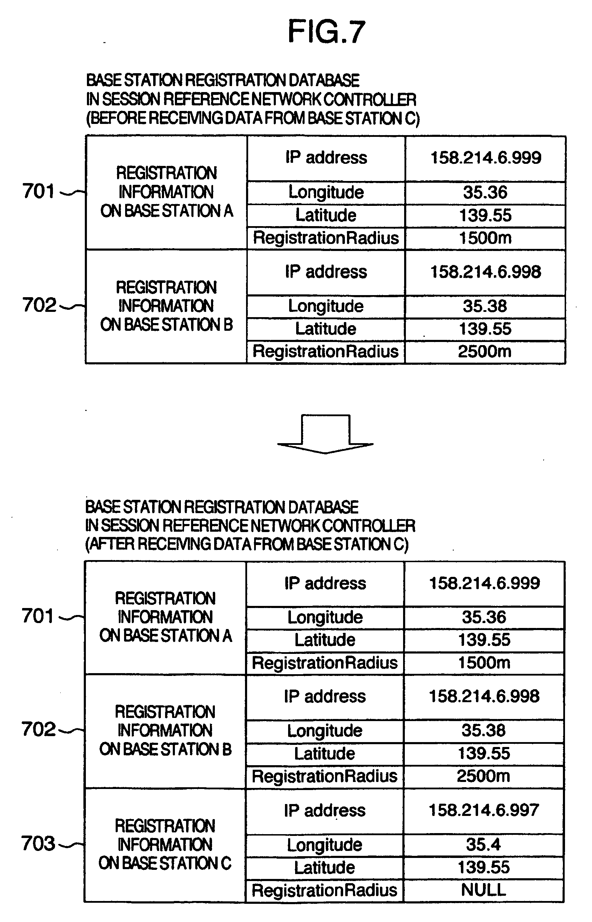

FIG. 7 is a diagram showing the base station registration information database 412 of the session reference network controller 102. In this diagram, the base station A 101-1 and the base station B 101-2 are existing base station, and the base station C 101-3 is a newly added base station.

Before data (IP address and longitude/latitude information) is received from the base station C 101-3, the database stores registration information 701 on the base station A 101-1 and registration information 702 on the base station B 101-2. After data (IP address and longitude/latitude information) is received from the base station C 101-3, the database stores registration information 703 on the base station C 101-3.

Note that, immediately after the base station C 101-3 is newly added, the Registration Radius in the registration information 703 on the base station C 101-3 is NULL because the base station C 101-3 itself cannot calculate the Registration Radius.

FIG. 8 is a flowchart showing how the Registration Radius is derived.

To derive the value of the Registration Radius of the base station C 101-3, the session reference network controller 102 requests the maintenance engineer to enter the number of base stations, N, to be included under control of the base station C 101-3 (to be included in the area in which communication can be carried out) and reads the entered value (step 801). If the already entered numeric value is used, the session reference network controller 102 reads the number of base stations, N, stored in the base station registration information database 412.

After reading the number of base stations N, the session reference network controller 102 calculates the distance between each of the base stations, registered in the base station registration information database 412, and the base station C 101-3. The session reference network controller 102 assigns priority to the base stations in ascending order of the calculated distance values and determines the base station that is Nth nearest from the base station C 101-3 (step 802).

And, the session reference network controller 102 determines the distance between the base station that is Nth nearest from the base station C 101-3 and the base station C 101-3 as the value of the Registration Radius (step 803). If the number of base stations in the base station registration information database 412 is smaller than N, the distance between the base station C 101-3 and the base station most distant from the base station C 101-3 is used as the value of the Registration Radius.

FIG. 9 is a diagram showing the topological relation between the base station C 101-3, and the base station A 101-1 and base station B 101-2. Referring to this figure, the following describes how to derive the Registration Radius when the base station A 101-1 and base station B 101-2 are located near the base station C 101-3.

The maintenance engineer enters N=2 as the number of base stations to be included in the range of the Registration Radius from the base station C 101-3. From the longitude/latitude information on the base station A 101-1, base station B 101-2, and base station C 101-3, the control unit 410 of the session reference network controller 102 calculates the distance between the base station C 101-3 and the base station A 101-1 as 4000m and the distance between the base station C 101-3 and the base station B 101-2 as 2000m. Therefore, when the base station A 101-1 and the base station B 101-2 are arranged according to the distance from the base station C 101-3, the most nearest base station is the base station B 101-2 and the second nearest base station is the base station A 101-1.

As a result, the control unit 410 of the session reference network controller 102 determines that the base station most distant from the base station C 101-3 is the base station A 101-1 and sets the Registration Radius=4000m (distance between base station C 101-3 and base station A 101-1).

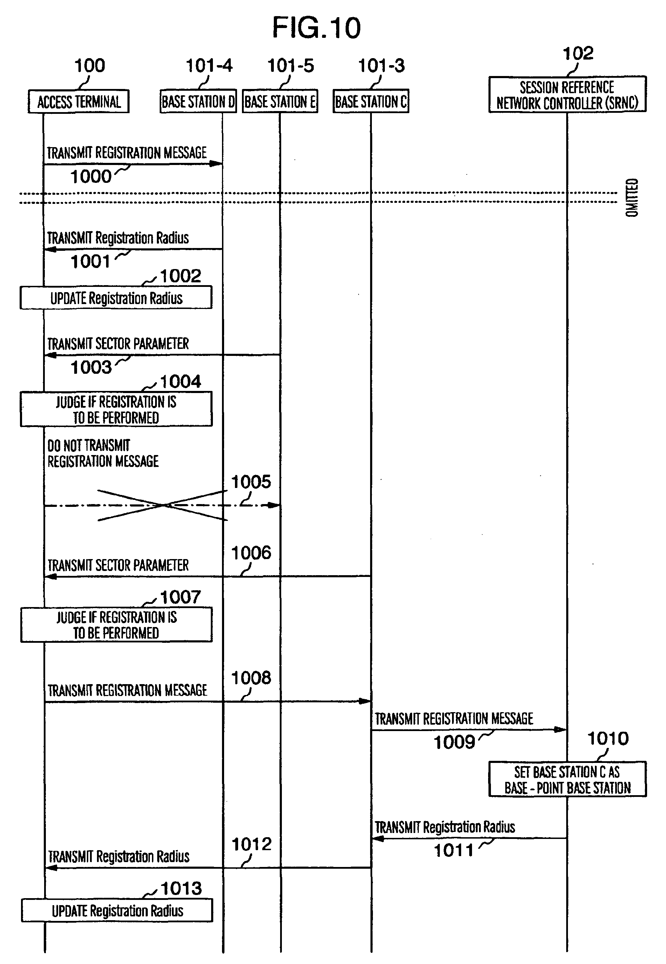

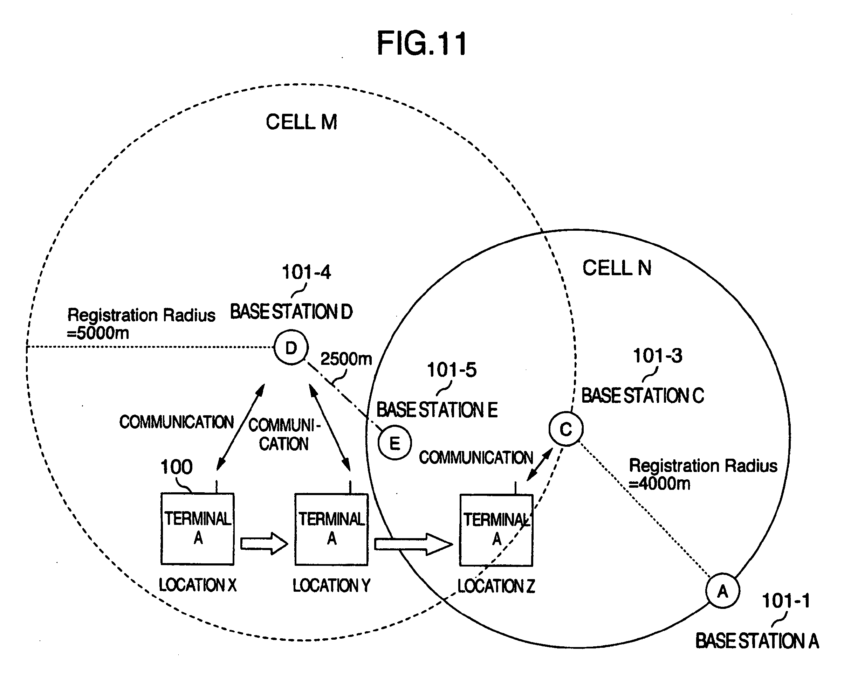

FIG. 10 is a sequence diagram showing how the access terminal 100 performs the location registration. FIG. 10 shows how the access terminal 100 performs the location registration for the base station C 101-3 using the diagram of the topological relation among access terminals and the base stations in FIG. 11.

As shown in FIG. 11, the access terminal 100 that is in the location X gradually moves to the location Y and then to the location Z. When in the location X, the access terminal 100 transmits the registration message to a base station D 101-4 to perform the location registration for the base station D 101-4 (step 1000). When the registration request is received, the base station D 101-4 transmits the Registration Radius to the access terminal 100 (step 1001). Although data is transmitted and received multiple times between the base station D 101-4 and the session reference network controller from step 1000 to step 1001, this processing is the same as the registration processing with the base station C 101-3 that will be described later. The duplicated description that will be described is omitted here.

When the Registration Radius is received, the access terminal 100 stores it in the registration information database 212 (updates the Registration Radius) (step 1002). The stored Registration Radius is used to determine if the location registration is to be performed in the movement destination.

Next, when the access terminal 100 moves from the X location to the Y location, it receives the sector parameter including the longitude/latitude information transmitted from a base station E 101-5 most nearest from the Y location (step 1003).

At this time, the access terminal 100 determines if the location registration is to be performed for the base station E 101-5 (step 1004). More specifically, the access terminal 100 compares the longitude/latitude of the base station E 101-5, included in the sector parameter, with the longitude/latitude of the base station D 101-4 included in the registration information database 212 to calculate the movement distance of the access terminal 100 itself. By checking the calculation result, the access terminal 100 determines if the movement distance has reached the Registration Radius stored in the registration information database 212. If the movement distance has reached the Registration Radius, the access terminal 100 performs the location registration; if the movement distance has not reached the Registration Radius, the access terminal 100 does not perform the location registration (step 1005).

The movement distance of the access terminal 100 itself may also be represented by the distance between the base station, for which the location registration was performed last, and the access terminal.

As shown in FIG. 10, because the movement distance of the access terminal (that is, the distance between the base station D 101-4 and the base station E 101-5) is 2500m that is shorter than the Registration Radius value of 5000m, the access terminal 100 does not perform the location registration for the base station E 101-5 in the Y location (see cell M).

Next, when the access terminal 100 moves from the location Y to the location Z, it receives the sector parameter including the longitude/latitude information transmitted from the base station C 101-3 located most nearest from the location Z. (step 1006).

At this time, the access terminal 100 determines if the location registration is to be performed for the base station C 101-3 (step 1007). More specifically, the access terminal 100 compares the longitude/latitude of the base station C 101-3 included in the sector parameter with the longitude/latitude of the base station D 101-4 stored in the registration information database 212 to calculate the movement distance of the access terminal 100 itself. By checking the calculation result, the access terminal 100 determines if the movement distance has reached the Registration Radius stored in the registration information database 212. If the movement distance has reached the Registration Radius, the access terminal 100 performs the location registration; if the movement distance has not reached the Registration Radius, the access terminal 100 does not perform the location registration.

As shown in FIG. 10, because the movement distance of the access terminal (that is, the distance between the base station D 101-4 and the base station C 101-3) is 5000m that has reached the Registration Radius value of 5000m, the access terminal 100 in the Z location transmits the registration message to the base station C 101-3 to perform the location registration (step 1008) (see cell M).

When the registration message is received from the access terminal 100, the base station C 101-3 transmits the registration message to the session reference network controller 102 (step 1009).

When the registration message is received from the base station C 101-3, the session reference network controller 102 sets the base station C 101-3 as the base-point base station and stores this correspondence information in the base-point base station information database 413 (step 1010). The base-point base station is a base station, provided one for each access terminal 100, for transmitting the call arrival signal to the access terminal 100 when a call addressed to the access terminal 100 arrives.

Next, the session reference network controller 102 transmits the Registration Radius of the base station C 101-3 to the access terminal 100 via the base station C 101-3 (steps 1011, 1012).

When the Registration Radius is received, the access terminal 100 stores it in the registration information database 212 (update the Registration Radius) (step 1013). After that, the access terminal 100 continues to carry out communication under control of the base station C 101-3 until its movement distance reaches the Registration Radius value of 4000m (see cell N).

In step 1008, the access terminal 100 preferably inserts the identifier of an access terminal into the registration message. This identifier allows the session reference network controller 102 to easily identify the access terminal 100, whose Registration Radius is to be updated, from among many access terminals.

As described above, this embodiment allows the access terminal 100 to freely set the controllable area (Registration Radius) of a base station in an environment, where distance-based location information is registered, based on the location information on a newly added base station and the number of base stations entered into the OAM (Operation, Administration and Maintenance) server. Note that the maintenance engineer may change the number of base stations described above according to whether or not there are many base stations in the area managed by the session reference network controller. For example, if there are many base stations in the area, the controllable area of a base station can be set narrow (a small Registration Radius value) to reduce the number of times the location registration is performed by the access terminal. That is, the wireless resource amount and the access terminal power consumption, involved in registration, can be reduced.

In this embodiment, the automatic input of registration information into the session reference network controller, which integrally manages the access terminals and base stations, eliminates the possibility of human errors that may occur when the registration information is set. In addition, this embodiment eliminates the need to manually set again the registration information in the base stations and the session reference network controller, which are required each time a new base station is added, thus giving the system operation companies a large cost merit.

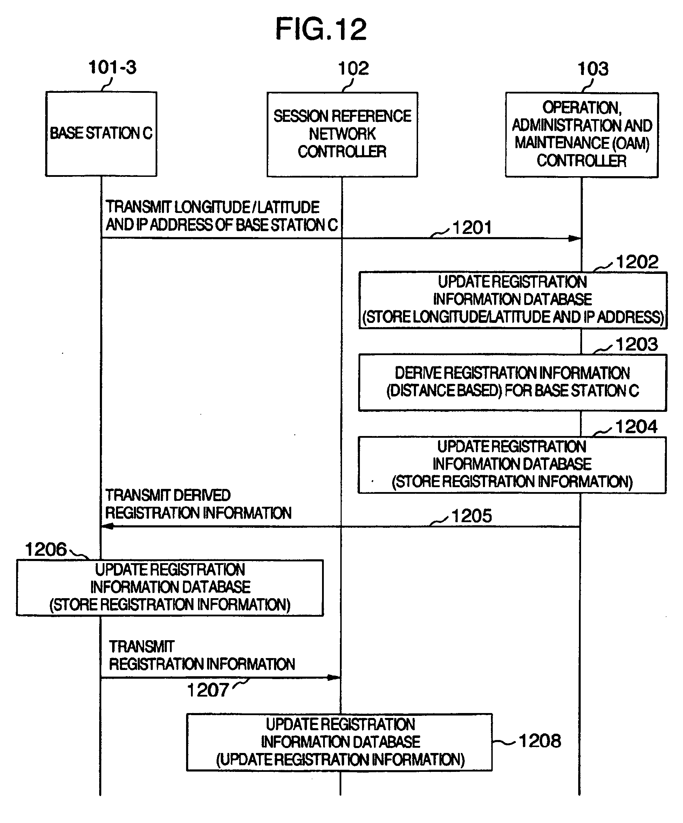

Referring to FIG. 12, the following describes the derivation of a Registration Radius, not by the session reference network controller 102, but by OAM (Operation, Administration and Maintenance) server 103. This figure is a sequence diagram describing a pattern, different from that in FIG. 6, for automatically setting the registration information in a newly added base station. The base station C 101-3 transmits its own longitude/latitude and IP address to the OAM (Operation, Administration and Maintenance) server 103 (step 1201). The OAM (Operation, Administration and Maintenance) server 103 stores the received longitude/latitude and IP address of the base station C 101-3 in the registration information database 512 (step 1202). After that, the OAM (Operation, Administration and Maintenance) server 103 derives the Registration Radius of the base station C 101-3 based on the longitude/latitude information on the base station C 101-3 (step 1203).

In addition, the OAM (Operation, Administration and Maintenance) server 103 stores the Registration Radius information in the registration information database 512 (step 1204) and, at the same time, transmits the derived Registration Radius information to the base station C 101-3 (step 1205). The base station C 101-3 stores the registration information, received from the OAM (Operation, Administration and Maintenance) server 103, in the registration information database 312 (step 1206) and transmits the longitude/latitude and IP address information on the station C to the session reference network controller 102 (step 1207). The session reference network controller 102 stores the longitude/latitude and IP address information, received from the base station C 101-3, in the base station registration information database 412 (step 1208).

Although an IP address is used to identify a base station in this embodiment, the base station identifier may also be used, instead of the IP address, as long as the base station identifier identifies the base station.

It should be further understood by those skilled in the art that although the foregoing description has been made on embodiments of the invention, the invention is not limited thereto and various changes and modifications may be made without departing from the scope of the appended claims.

## Claims

1. A wireless communication system comprising:
an access terminal (100);
a plurality of base stations (101) that communicate with the access terminal (100); and
a session reference network controller (102) that controls the plurality of base stations (101),
wherein the access terminal (100) comprises:
a storage unit (212) that stores location information on a base station (101) of the plurality of base stations, for which the location information on the base station (101) was registered last, and a base distance of the base station (101) which represents a registration radius used by the access terminal (100) as a threshold value until which registration at the base station (101) is to be performed; and
a registration request unit (210) that, when a distance between the base station (101) for which the location information was registered last and a further base station (101) from which new location information is transmitted exceeds the base distance stored in the storage unit (212), transmits a registration request to the further base station (101) from which new location information is transmitted,
each of the plurality of base stations (101) comprises:
a registration unit (310) that, when a registration request is received, stores the access terminal (100), from which the registration request is transmitted, as an access terminal (100) belonging to a wireless call area and transmits a request to notify the base distance of the base station (101) to which the access terminal (100) has transmitted the registration message most recently to the session reference network controller (102), and
the session reference network controller (102) comprises:
a storage unit (412) that stores a number N of base stations (101) and location information and base distances of the plurality of base stations (101);
a base distance setting unit (410) that, when a request to set the base distance is received from a first base station, calculates a distance between each of the plurality of base stations (101) and the first base station based on the location information on the plurality of base stations (101) stored in the storage unit (412), determines a second base station that is Nth nearest from the first base station, sets a distance between the first base station and the second base station as a base distance of the first base station, and stores the base distance in the storage unit (412); and
a base distance transmission unit (410) that, when a request to notify the base distance is received, reads the base distance of the base station (101), from which the request to notify the base distance is received, from the storage unit (412) and transmits, via the base station, the base distance to the access terminal (100) from which the registration request is received.

2. The wireless communication system according to claim 1 wherein
the session reference network controller (102) further comprises an input unit via which the number of base stations, N, is entered.

3. A session reference network controller (102), which controls a plurality of base stations (101), comprising:
a storage unit (412) that stores a number N of base stations (101) and location information and base distances of the plurality of base stations (101) which represent registration radii used by an access terminal (100) as a threshold value until which registration at the base stations (101) is to be performed;
a base distance setting unit (410) that, when a request to set the base distance is received from a first base station, calculates a distance between each of the plurality of base stations (101) and the first base station based on the location information on the plurality of base stations (101) stored in the storage unit (412), determines a second base station that is Nth nearest from the first base station, sets a distance between the first base station and the second base station as a base distance of the first base station, and stores the base distance in the storage unit (412); and
a base distance transmission unit (410) that, when a request to notify the base distance is received, reads the base distance of the base station, from which the request to notify the base distance is received, from the storage unit (412) and transmits, via the base station, the base distance to the access terminal (100) from which a registration request is received.

4. The session reference network controller (102) according to claim 3, further comprising an input unit via which the number of base stations, N, to be stored in the storage unit (412) is entered.

5. A call processing control method of controlling a plurality of base stations (101) comprising:
a first step of storing a number of base stations (101) N and location information and base distances of the plurality of base stations (101) which represent registration radii used by an access terminal (100) as a threshold value until which registration at the base stations (101) is to be performed;
a second step of, when a request to set the base distance is received from a first base station, calculating a distance between each of the plurality of base stations (101) and the first base station based on the location information on the plurality of base stations (101), determining a second base station that is Nth nearest from the first base station, setting a distance between the first base station and the second base station as a base distance of the first base station, and storing the base distance in a storage unit (412); and
a third step of, when a request to notify the base distance is received, reading the base distance of the base station, from which the request to notify the base distance is received, from the storage unit (412) and transmitting, via the base station, the base distance to the access terminal (100) from which a registration request is received.

6. The call processing control method according to claim 5, further comprising a step of receiving the number of base stations, N.

## Patentansprüche

1. Drahtloses Kommunikationssystem mit
einem Zugangsterminal (100),
mehreren Basisstationen (101), die mit dem Zugangsterminal (100) kommunizieren, und
einer Sitzungsreferenz-Netzwerksteuereinheit (102), die die mehreren Basisstationen (101) steuert,
wobei das Zugangsterminal (100) aufweist:
eine Speichereinheit (212), die Ortsinformation über eine Basisstation (101) der mehreren Basisstationen, für die die Ortsinformation über die Basisstation (101) zuletzt registriert wurde, und einen Basisabstand der Basisstation (101) speichert, der einen Registrierradius darstellt, der durch das Zugangsterminal (100) als ein Schwellenwert verwendet wird, bis zu dem eine Registrierung an der Basisstation (101) durchzuführen ist, und
eine Registrieranfrageeinheit (210), die, wenn ein Abstand zwischen der Basisstation (101), für die die Ortsinformation zuletzt registriert wurde, und einer weiteren Basisstation (101), von der neue Ortsinformation gesendet wird, den in der Speichereinheit (212) gespeicherten Basisabstand überschreitet, eine Registrieranfrage zu der weiteren Basisstation (101) sendet, von der neue Ortsinformation gesendet wird,
wobei jeder der mehreren Basisstationen (101) aufweist:
eine Registriereinheit (310), die, wenn eine Registrieranfrage empfangen wird, das Zugangsterminal (100), von dem die Registrieranfrage gesendet wird, als ein Zugangsterminal (100) speichert, das zu einem Drahtlosrufbereich gehört, und eine Anfrage sendet, um den Basisabstand der Basisstation (101), zu der das Zugangsterminal (100) die Registriemachricht zuletzt gesendet hat, an die Sitzungsreferenz-Netzwerksteuereinheit (102) mitzuteilen, und
die Sitzungsreferenz-Netzwerksteuereinheit (102) aufweist:
eine Speichereinheit (412), die eine Anzahl N von Basisstationen (101), sowie Ortsinformation und Basisabstände der mehreren Basisstationen (101) speichert,
eine Basisabstandeinstelleinheit (410), die, wenn eine Anfrage zum Einstellen des Basisabstands von einer ersten Basisstation empfangen wird, einen Abstand zwischen jeder der mehreren Basisstationen (101) und der ersten Basisstation auf Grundlage der Ortsinformation über die mehreren Basisstationen (101) berechnet, die in der Speichereinheit (412) gespeichert ist, eine zweite Basisstation bestimmt, die die N.-nächste von der ersten Basisstation ist, einen Abstand zwischen der ersten Basisstation und der zweiten Basisstation als einen Basisabstand der ersten Basisstation einstellt, und den Basisabstand in der Speichereinheit (412) speichert, und
eine Basisabstandssendeeinheit (410), die, wenn eine Anfrage zum Mitteilen des Basisabstands empfangen wird, den Basisabstand der Basisstation (101), von der die Anfrage zum Mitteilen des Basisabstands empfangen wurde, aus der Speichereinheit (412) ausliest, und über die Basisstation den Basisabstand an das Zugangsterminal (100) sendet, von dem die Registrieranfrage empfangen wurde.

2. Drahtloses Kommunikationssystem nach Anspruch 1, wobei die Sitzungsreferenz-Netzwerksteuereinheit (102) ferner eine Eingabeeinheit aufweist, über die die Anzahl von Basisstationen, N, eingegeben wird.

3. Sitzungsreferenz-Netzwerksteuereinheit (102), die mehrere Basisstationen (101) steuert, mit
einer Speichereinheit (412), die eine Anzahl N von Basisstationen (101), sowie Ortsinformation und Basisabstände der mehreren Basisstationen (101) speichert, die Registrierradien darstellen, die durch ein Zugangsterminal (100) als ein Schwellenwert verwendet werden, bis zu dem die Registrierung an den Basisstationen (101) durchzuführen ist,
eine Basisabstandeinstelleinheit (410), die, wenn eine Anfrage zum Einstellen des Basisabstands von einer ersten Basisstation empfangen wird, einen Abstand zwischen jeder der mehreren Basisstationen (101) und der ersten Basisstation auf Grundlage der Ortsinformation über die mehreren Basisstationen (101) berechnet, die in der Speichereinheit (412) gespeichert ist, eine zweite Basisstation bestimmt, die die N.-nächste von der ersten Basisstation ist, einen Abstand zwischen der ersten Basisstation und der zweiten Basisstation als einen Basisabstand der ersten Basisstation einstellt, und den Basisabstand in der Speichereinheit (412) speichert, und
eine Basisabstandssendeeinheit (410), die, wenn eine Anfrage zum Mitteilen des Basisabstands empfangen wird, den Basisabstand der Basisstation (101), von der die Anfrage zum Mitteilen des Basisabstands empfangen wurde, aus der Speichereinheit (412) ausliest, und über die Basisstation den Basisabstand an das Zugangsterminal (100) sendet, von dem die Registrieranfrage empfangen wurde.

4. Sitzungsreferenz-Netzwerksteuereinheit (102) nach Anspruch 3, ferner mit einer Eingabeeinheit, über die die in der Speichereinheit (412) zu speichernde Anzahl von Basisstationen, N, eingegeben wird.

5. Anrufverarbeitungs-Steuerverfahren zum Steuern mehrerer Basisstationen (101), wobei
in einem ersten Schritt eine Anzahl von Basisstationen (101) N, sowie Ortsinformation und Basisabstände der mehreren Basisstationen (101) gespeichert werden, die Registrierradien darstellen, die durch ein Zugangsterminal (100) als ein Schwellenwert verwendet werden, bis zu dem eine Registrierung an den Basisstationen (101) durchzuführen ist,
in einem zweiten Schritt, wenn eine Anfrage zum Einstellen des Basisabstands von einer ersten Basisstation empfangen wird, ein Abstand zwischen jeder der mehreren Basisstationen (101) und der ersten Basisstation auf Grundlage der Ortsinformation über die mehreren Basisstationen (101) berechnet wird, eine zweite Basisstation bestimmt wird, die die N.-nächste von der ersten Basisstation ist, ein Abstand zwischen der ersten Basisstation und der zweiten Basisstation als ein Basisabstand der ersten Basisstation eingestellt wird, und der Basisabstand in einer Speichereinheit (412) gespeichert wird, und
in einem dritten Schritt, wenn eine Anfrage zum Mitteilen des Basisabstands empfangen wird, der Basisabstand der Basisstation, von der die Anfrage zum Mitteilen des Basisabstands empfangen wurde, aus der Speichereinheit (412) ausgelesen und über die Basisstation der Basisabstand an das Zugangsterminal (100) gesendet wird, von dem eine Registrieranfrage empfangen wird.

6. Anrufverarbeitungs-Steuerverfahren nach Anspruch 5, wobei in einem weiteren Schritt die Anzahl von Basisstationen, N, empfangen wird.

## Revendications

1. Système de communication sans fil comportant :
un terminal d'accès (100),
une pluralité de stations de base (101) qui communiquent avec le terminal d'accès (100), et
un contrôleur de réseau de référence de session (102) qui commande la pluralité de stations de base (101),
dans lequel le terminal d'accès (100) comporte :
une unité de mémorisation (212) qui mémorise des informations de localisation sur une station de base (101) parmi la pluralité de stations de base, pour laquelle les informations de localisation sur la station de base (120) ont été enregistrées en dernier, et une distance de base de la station de base (101) qui représente un rayon d'enregistrement utilisé par le terminal d'accès (100) en tant que valeur de seuil jusqu'à laquelle l'enregistrement dans la station de base (101) doit être exécuté, et
une unité de demande d'enregistrement (210) laquelle, lorsqu'une distance entre la station de base (101) pour laquelle les informations de localisation ont été enregistrées en dernier et une station de base supplémentaire (101) à partir de laquelle de nouvelles informations de localisation sont transmises dépasse la distance de base mémorisée dans l'unité de mémorisation (212), transmet une demande d'enregistrement à la station de base supplémentaire (101) à partir de laquelle de nouvelles informations de localisation sont transmises,
chaque station de la pluralité de stations de base (101) comporte :
une unité d'enregistrement (310) laquelle, lorsqu'une demande d'enregistrement est reçue, mémorise le terminal d'accès (100), à partir duquel la demande d'enregistrement est transmise, en tant que terminal d'accès (100) appartenant à une zone d'appel sans fil et transmet une demande pour notifier la distance de base de la station de base (101) à laquelle le terminal d'accès (100) a transmis le message d'enregistrement le plus récemment au contrôleur de réseau de référence de session (102), et
le contrôleur de réseau de référence de session (102) comporte :
une unité de mémorisation (412) qui mémorise un nombre N de stations de base (101) et des informations de localisation et des distances de base de la pluralité de stations de base (101),
une unité d'établissement de distance de base (410) laquelle, lorsqu'une demande visant à établir la distance de base est reçue en provenance d'une première station de base, calcule une distance entre chaque station parmi la pluralité de stations de base (101) et la première station de base en s'appuyant sur les informations de localisation sur la pluralité de stations de base (101) mémorisées dans l'unité de mémorisation (412), détermine une seconde station de base qui est la N^{ème} plus proche de la première station de base, établit une distance entre la première station de base et la deuxième station de base en tant que distance de base de la première station de base, et mémorise la distance de base dans l'unité de mémorisation (412), et
une unité de transmission de distance de base (410) laquelle, lorsqu'une demande pour notifier la distance de base est reçue, lit la distance de base de la station de base (101), depuis laquelle la demande pour notifier la distance de base est reçue, à partir de l'unité de mémorisation (412) et transmet, via la station de base, la distance de base au terminal d'accès (100) à partir duquel la demande d'enregistrement est reçue.

2. Système de communication sans fil selon la revendication 1, dans lequel
le contrôleur de réseau de référence de session (102) comporte en outre une unité d'entrée à travers laquelle le nombre de stations de base, N, est entré.

3. Contrôleur de réseau de référence de session (102), lequel commande une pluralité de stations de base (101), comportant :
une unité de mémorisation (412) qui mémorise un nombre N de stations de base (101) et des informations de localisation et des distances de base de la pluralité de stations de base (101) qui représentent des rayons d'enregistrement utilisés par un terminal d'accès (100) en tant que valeur de seuil jusqu'à laquelle l'enregistrement dans les stations de base (101) doit être exécuté,
une unité d'établissement de distance de base (410) laquelle, lorsqu'une demande visant à établir la distance de base est reçue en provenance d'une première station de base, calcule une distance entre chaque station de la pluralité de stations de base (101) et la première station de base sur la base des informations de localisation sur la pluralité de stations de base (101) mémorisées dans l'unité de mémorisation (412), détermine une deuxième station de base qui est la N^{ème} plus proche de la première station de base, établit une distance entre la première station de base et la deuxième station de base en tant que distance de base de la première station de base, et mémorise la distance de base dans l'unité de mémorisation (412), et
une unité de transmission de distance de base (410) laquelle, lorsqu'une demande pour notifier la distance de base est reçue, lit la distance de base de la station de base, depuis laquelle la demande pour notifier la distance de base est reçue, à partir de l'unité de mémorisation (412) et transmet, via la station de base, la distance de base au terminal d'accès (100) à partir duquel une demande d'enregistrement est reçue.

4. Contrôleur de réseau de référence de session (102) selon la revendication 3, comportant en outre une unité d'entrée à travers laquelle le nombre de stations de base, N, à mémoriser dans l'unité de mémorisation (412) est entré.

5. Procédé de commande de traitement d'appel consistant à commander une pluralité de stations de base (101) comportant :
une première étape consistant à mémoriser un certain nombre de stations de base (101) N et d'informations de localisation et de distances de base de la pluralité de stations de base (101) qui représentent des rayons d'enregistrement utilisés par un terminal d'accès (100) en tant que valeur de seuil jusqu'à laquelle l'enregistrement dans les stations de base (101) doit être exécuté,
une deuxième étape consistant à, lorsqu'une demande visant à établir la distance de base est reçue en provenance d'une station de base, calculer une distance entre chaque station de la pluralité de stations de base (101) et la première station de base sur la base des informations de localisation sur la pluralité de stations de base (101), déterminer une deuxième station de base qui la N^{ème} plus proche de la première station de base, établir une distance entre la première station de base et la deuxième station de base en tant que distance de base de la première station de base, et mémoriser la distance de base dans l'unité de mémorisation (412), et
une troisième étape consistant à, lorsqu'une demande de notification de la station de base est reçue, lire la distance de base de la station de base, depuis laquelle la demande de notification de la distance de base est reçue, à partir de l'unité de mémorisation (412) et transmettre, via la station de base, la distance de base au terminal d'accès (100) à partir duquel une demande d'enregistrement est reçue.

6. Procédé de commande de traitement d'appel selon la revendication 5, comportant en outre une étape de réception du nombre de stations de base, N.
